# EUROPEAN PATENT SPECIFICATION

(11) **EP 1 724 509 B1**
(45) Date of publication and mention of the grant of the patent: **16.03.2011**
(21) Application number: 06394006.8
(22) Date of filing: 24.02.2006
(51) Int. Cl.: F16L 27/08

(54) **A variable angle pipe connector**
Rohrverbindung mit verstellbarem Winkel
Raccord de tuyaux à angle variable

(30) Priority: 19.05.2005 IE 20050334
(43) Date of publication of application: 22.11.2006
(73) Proprietor: Floplast Limited, Sittingbourne, Kent ME10 3FP (GB)
(72) Inventor: Frawley, Patrick, Hartley, Kent (GB)
(74) Representative: Gorman, Francis Fergus

(56) References cited:
- FR-A- 2 273 221
- US-A- 2 726 104
- US-A- 4 781 405

## Description

The present invention relates to a variable angle pipe connector, and in particular, to a variable angle pipe connector for coupling two pipes.

Such variable angle pipe connectors are known, and are commonly used where the angle which a pair of pipes, which are to be coupled, make with each other is unknown or non-standard, and such variable angle pipe connectors are also used where one wishes to minimise the stock of pipe connectors to be carried for joining pairs of pipes, where the angle between the pipes of each pair varies from pipe pair to pipe pair. Typical variable angle pipe connectors are disclosed in PCT Published Application Specification No. WO 92/19901, Japanese Published Patent Specifications Nos. 8-326972 and 4-266687, German Patent Specifications Nos. 27 33 571 and 297 09 609, British Patent Specifications Nos. 2,167,512, 1,032,691 and 1,581,051, and French Patent Specification No. 2,273,221.

Such variable angle pipe connectors may be provided in two-part or three-part form, and are suitable for joining a pair of pipes where the central axes of the respective pipes extend at any angle from 0° with the central axes coinciding with each other, up to 90°. The parts of such variable angle pipe connectors are rotatable relative to each other for varying the joint angle of the variable angle pipe connector. Accordingly, infinite variation in the joint angle from 0° to 90° is achievable with such variable angle pipe connectors.

However, such variable angle pipe connectors suffer from various disadvantages. In general, such variable angle pipe connectors tend to be relatively complex and thus relatively difficult and costly to manufacture. Additionally, such variable angle pipe connectors in many cases are prone to leaking at the joints between the various parts of the pipe connector. Leaking can be a particular problem in variable angle pipe connectors in which the pipe parts which form the variable angle pipe connector are coupled together by snap-fit couplings. Unless the pipe parts of variable angle pipe connectors, the snap-fit couplings and the associated seals are precision formed, consistency in the joints between the pipe parts of variable angle pipe connectors is impossible to achieve, and thus the tightness of the joints between the pipe parts varies from variable angle pipe connector to variable angle pipe connector. This thus leads to leaks from the joints between the pipe parts of variable angle pipe connectors which cannot be adequately tightened.

French Patent Specification No. 2,273,221 of Menicucci discloses a variable angle pipe connector corresponding to the preamble of claim 1, which comprises a first pipe part and a second pipe part which are coupleable by a gland nut which engages a coupling flange of the first pipe part, and a threaded spigot of the other pipe part for securing the two pipe parts together with the first and second faces of the respective pipe parts coupled together.

There is therefore a need for a variable angle pipe connector which addresses at least some of the problems of known variable angle pipe connectors.

The present invention is directed towards providing such a variable angle pipe connector.

According to the invention there is provided a variable angle pipe connector for coupling two pipes, the variable angle pipe connector comprising a first pipe part and a second pipe part, the first pipe part having a first bore extending therethrough defining a longitudinally extending first main central axis, and terminating in a first coupling end defining a first coupling face extending at a first angle to the first main central axis, a first opening extending through the first coupling face to the first bore and defining a first secondary central axis normal to the first coupling face and extending relative to the first main central axis at an angle equal to ninety degrees less the first angle, the second pipe part having a second bore extending therethrough defining a longitudinally extending second main central axis, and terminating in a second coupling end defining a second coupling face extending at a second angle to the second main central axis, at least one of the first and second angles being less than 90°, a second opening extending through the second coupling face to the second bore and defining a second secondary central axis normal to the second coupling face and extending relative to the second main central axis at an angle equal to ninety degrees less the second angle, a coupling means for coupling the first and second pipe parts together with the first and second secondary central axes coinciding, the first and second openings communicating the first and second bores of the respective first and second pipe parts, and the first and second pipe parts being rotatable relative to each other about the first and second secondary central axes for varying an included angle defined by the first and second main central axes, the coupling means comprising a coupling flange extending externally from one of the first and second pipe parts adjacent the corresponding one of the first and second coupling ends thereof, a hollow threaded spigot extending from the corresponding one of the first and second coupling ends of the other of the first and second pipe parts, and a gland nut co-operable with the coupling flange and the threaded spigot for coupling the first and second pipe parts together, wherein a securing means is provided for securing the gland nut with the threaded spigot, the securing means comprising a pair of inter-engageable complementary formations, one of the said formations being located adjacent the threaded spigot, and the other of the inter-engageable complementary formations being located on the gland nut.

In one embodiment of the invention the threaded spigot is externally threaded, and the gland nut is internally threaded for co-operating with the external threads of the threaded spigot.

Preferably, the coupling flange defines a circular outer periphery defining a central axis coinciding with the corresponding one of the first and second secondary central axes of the first and second pipe parts from which the coupling flange extends.

Advantageously, the threaded spigot defines a central socket bore and a central spigot axis which coincides with the corresponding one of the first and second secondary central axes of the one of the first and second pipe parts from which the threaded spigot extends.

In another embodiment of the invention the coupling flange is spaced apart from the corresponding one of the first and second coupling faces of the one of the first and second pipe parts from which the coupling flange extends so that the corresponding one of the first and second coupling faces sits proud of the coupling flange, and a portion of the one of the first and second pipe parts from which the coupling flange extends between the coupling flange and the corresponding one of the first and second coupling faces forms a plug portion for engaging the socket bore of the threaded spigot, and a sealing means is located between the plug portion and the threaded spigot in the socket bore thereof for sealing the first and second pipe parts adjacent the coupling means.

In a further embodiment of the invention the sealing means comprises an annular sealing member located in an annular groove extending around one of the plug portion and the threaded spigot in the socket bore thereof.

Preferably, the plug portion is rotatably engageable in the socket bore.

In one embodiment of the invention the first angle is not less than 45°, and preferably, the first angle is not less than 55°, and ideally, the first angle is approximately 67.5°.

In one embodiment of the invention the second angle is not less than 45°, and preferably, the second angle is not less than 55°, and ideally, the second angle is approximately 67.5°.

Preferably, the second angle is similar to the first angle.

In another embodiment of the invention each second pipe part is rotatable relative to the first pipe part about the corresponding first and second secondary central axes through 180° between a first extreme position with the first and second main central axes coinciding, or extending parallel to each other, and a second extreme position with the first and second main central axes defining an included angle of not less than 90°, and preferably, in the second extreme position the first and second main central axes define an included angle of not less than 120°, and ideally, in the second extreme position the first and second main central axes define an included angle of approximately 135°.

Preferably, the first and second openings are of circular cross-sectional area. Advantageously, the first and second openings are of similar diameter.

In another embodiment of the invention the second pipe part terminates in a connecting means at an end thereof opposite the second coupling end for coupling the second pipe part to one of a pair of pipes to be coupled by the variable angle pipe connector.

Ideally, the first pipe part terminates at its opposite ends in respective first coupling ends, each first coupling end being adapted for coupling to a second coupling end of a corresponding second pipe part, and a pair of coupling means being provided for coupling the first pipe part to the respective second pipe parts. Advantageously, the first coupling faces defined by the respective first coupling ends of the first pipe part define respective first planes, and the first planes define an included angle equal to 180° less the sum of the two first angles.

Alternatively, the first pipe part terminates in a connecting means at an end thereof opposite the first coupling end for coupling the first pipe part to one of a pair of pipes to be coupled by the variable angle pipe connector.

In one embodiment of the invention each connecting means is a male connecting means, and in another embodiment of the invention each connecting means is a female connecting means.

In one embodiment of the invention the first and second pipe parts are of plastics material, and preferably, of injection moulded plastics material.

In another embodiment of the invention each gland nut is of plastics material, and ideally, is of injection moulded plastics material.

The advantages of the invention are many. By virtue of the fact that the first and second pipe parts of the variable angle pipe connector are coupled together by a coupling means which comprises a gland nut which co-operates with a coupling flange on one of the first and second pipe parts and a threaded spigot on the other of the first and second pipe parts, the first and second pipe parts can be readily coupled together, and indeed decoupled if necessary, and in particular, if when coupled together rotation of the first and second pipe parts relative to each other is difficult, the gland nut may be slackened in order to facilitate relative rotation of the first and second pipe parts for setting the first and second pipe parts in a desired angular configuration, and once set in the desired angular configuration, the gland nut can be readily tightened on the threaded spigot.

Additionally, the provision of the coupling means in the form of a gland nut which co-operates with a coupling flange on one of the first and second pipe parts, and a threaded spigot on the other of the first and second pipe parts permits the joints between the first and second pipe parts to be tightened to the necessary degree of tightness in order to avoid leaks, irrespective of the degree of precision to which the first and second pipe parts and the gland nuts are manufactured. Since the first and second pipe parts are coupled and secured together by a gland nut, the gland nut can be tightened until the joint between the first and second pipe parts is sufficiently tight in order to avoid a leaking joint.

The provision of a securing means for securing the gland nut in a tightened state on the threaded spigot has the added advantage that once the gland nut has been tightened to tighten the joint between the first and second pipe parts to the appropriate degree of tightness, the gland nut is positively prevented from loosening by the securing means.

A particular advantage of the invention is achieved by providing the gland nut with internal threads and the threaded spigot with external threads, since tightening of the gland nut can be readily easily carried out by gripping the gland nut on its outer periphery with a suitable spanner, wrench or other such implement, and where the variable angle pipe connector is provided without a securing means for securing the gland nut in a tightened state on the threaded spigot, the gland nut can be readily easily loosened by gripping the outer periphery by a suitable spanner, wrench or other suitable implement.

The advantage of providing the one of the first and second pipe parts which carries the coupling flange with a plug portion extending from the coupling flange, and the other of the first and second pipe parts with the threaded spigot which forms a socket bore is that the plug portion is engageable in the socket bore and is rotatable therein for facilitating rotation of the first and second pipe parts relative to each other. An additional advantage of providing the plug portion is that the co-operating action between the circumferential surfaces of the plug portion and the socket bore of the threaded spigot facilitates the inclusion of a sealing means between the plug portion and the threaded spigot for sealing the first and second pipe parts. By virtue of the fact that the plug portion extends into the socket bore, the sealing means can be readily provided by an O-ring seal, which may be located in a groove formed on the plug portion or in the socket bore.

The invention will be more clearly understood from the following description of a preferred embodiment thereof, which is given by way of example only, with reference to the accompanying drawings, in which:

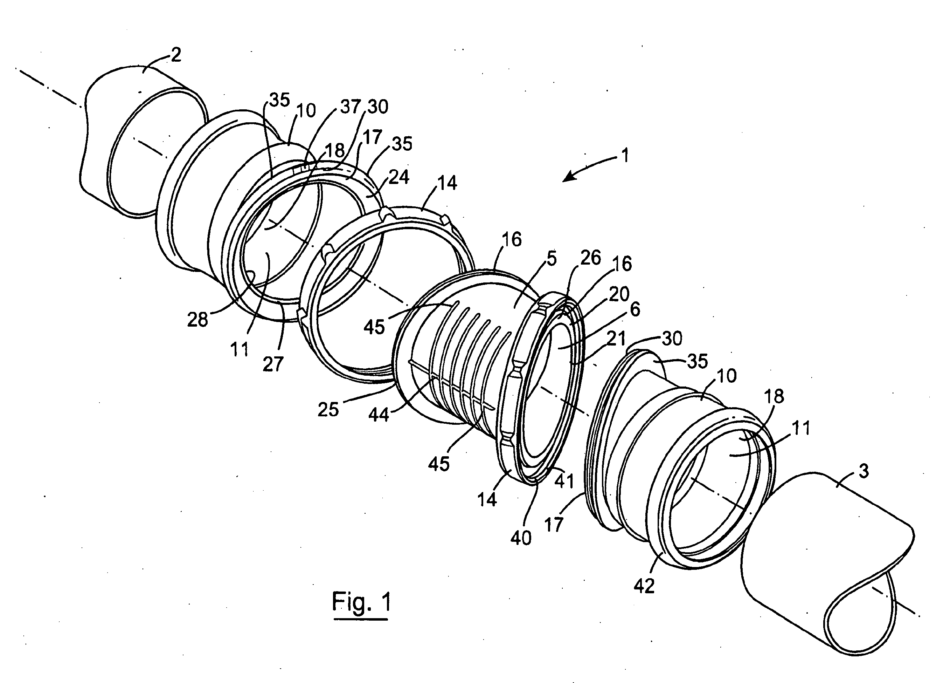

Fig. 1 is an exploded perspective view of a variable angle pipe connector according to the invention,
Fig. 2 is a partly cross-sectional plan view of the variable angle pipe connector of Fig. 1 in one configuration,
Fig. 3 is a transverse cross-sectional plan view of the variable angle pipe connector of Fig. 1 in the configuration of Fig. 2,
Fig. 4 is a view similar to Fig. 3 of the variable angle pipe connector of Fig. 1 in a different configuration to that of Fig. 3,
Fig. 5 is a view similar to that of Fig. 3 of the variable angle pipe connector of Fig. 1 in a further different configuration to that of Fig. 3,

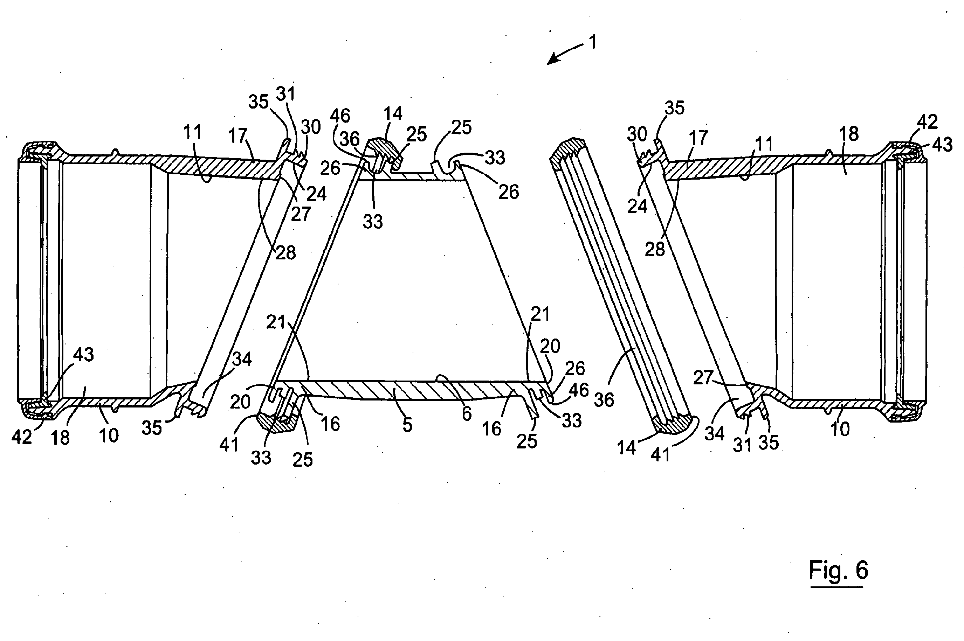

Fig. 6 is an exploded transverse cross-sectional plan view of the variable angle pipe connector of Fig. 1,

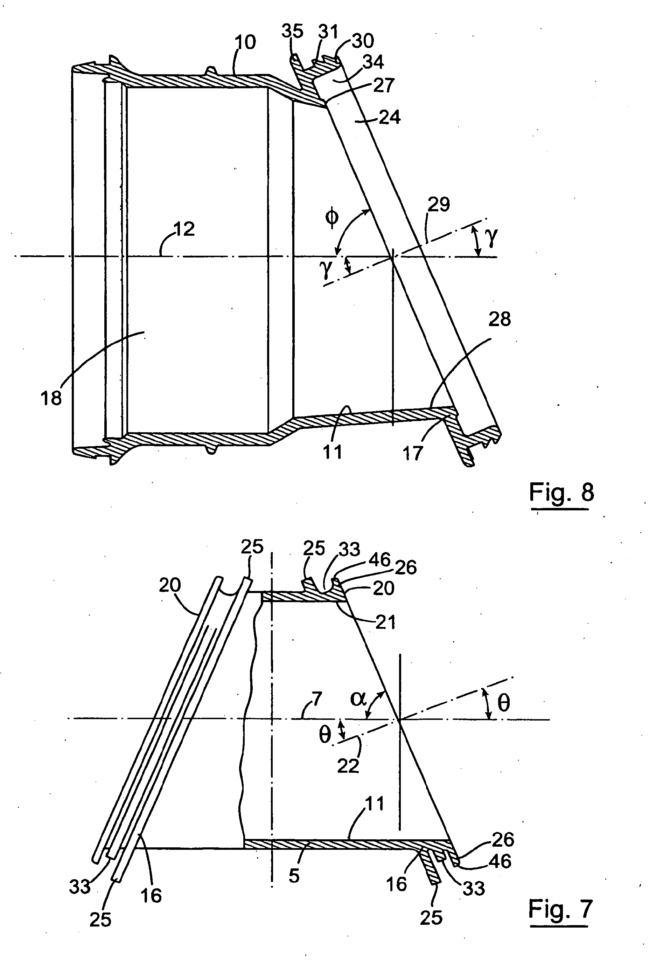

Fig. 7 is a partly cross-sectional plan view of a portion of the variable angle pipe connector of Fig. 1,
Fig. 8 is a transverse cross-sectional plan view of another portion of the variable angle pipe connector of Fig. 1,

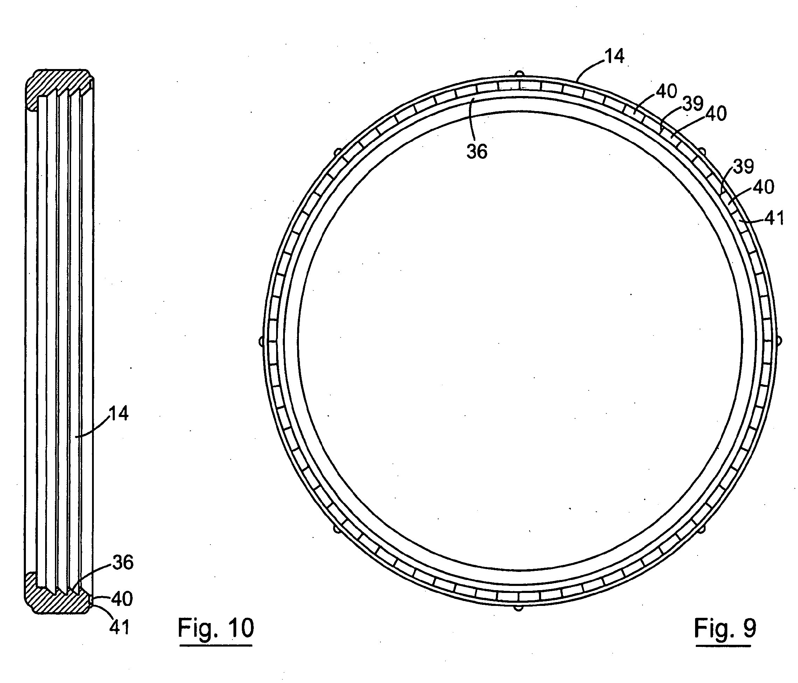

Fig. 9 is an end elevational view of another portion of the variable angle pipe connector of Fig. 1,
Fig. 10 is a transverse cross-sectional side elevational view of the portion of Fig. 9 of the variable angle pipe connector of Fig. 1,

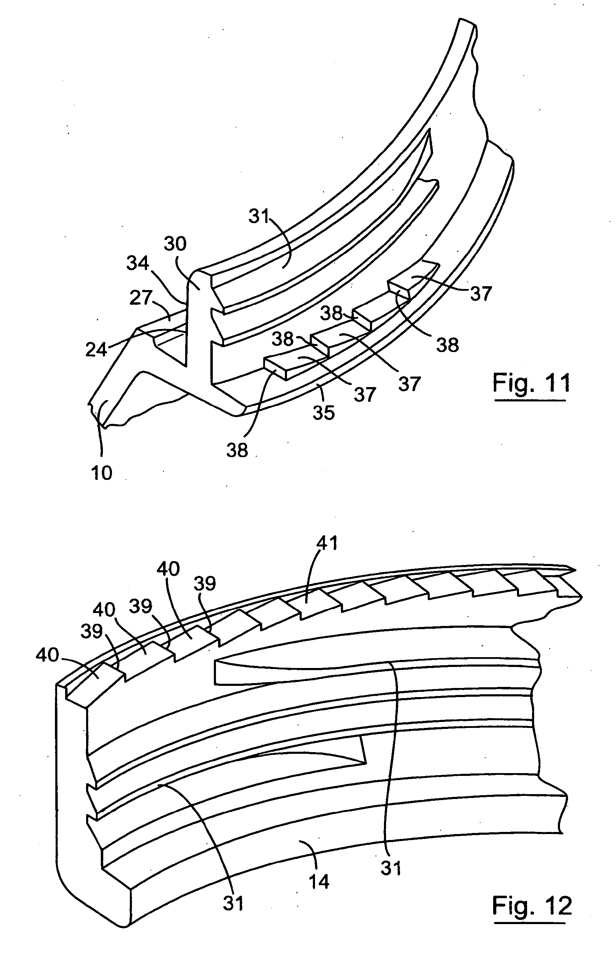

Fig. 11 is an enlarged perspective view of a detail of the variable angle pipe connector of Fig. 1, and
Fig. 12 is an enlarged perspective view of another detail of the variable angle pipe connector of Fig. 1.

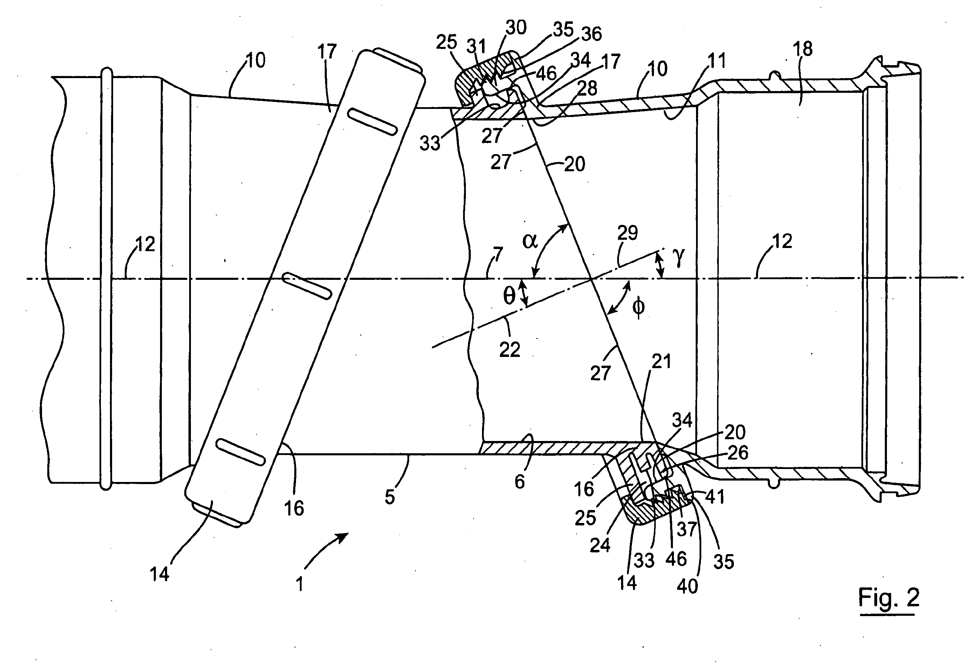

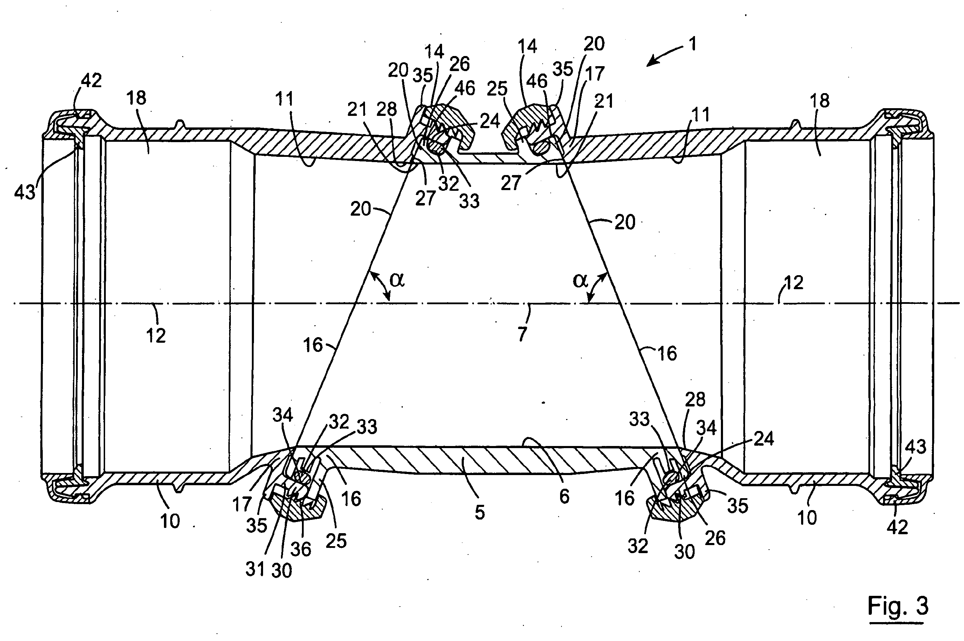

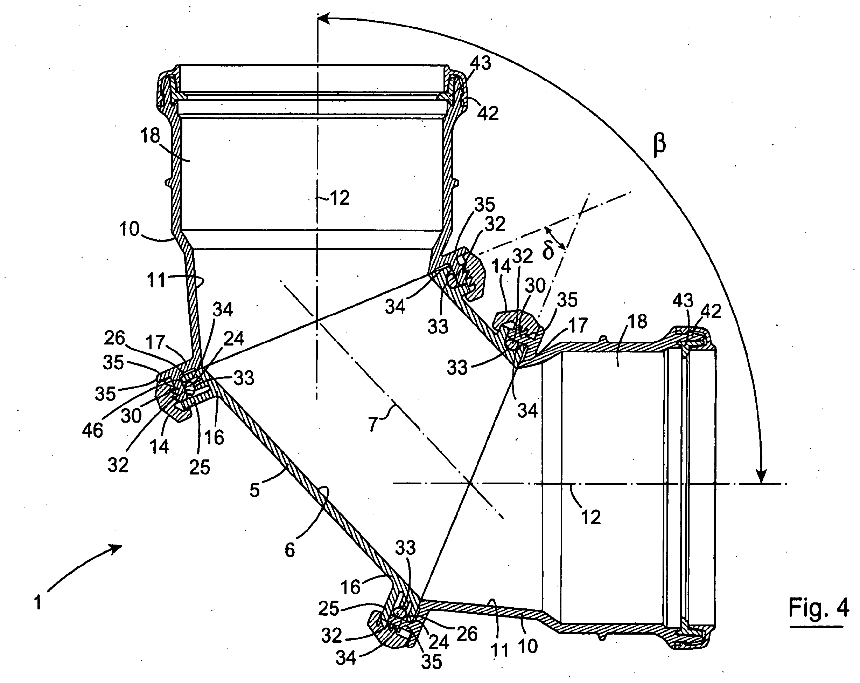

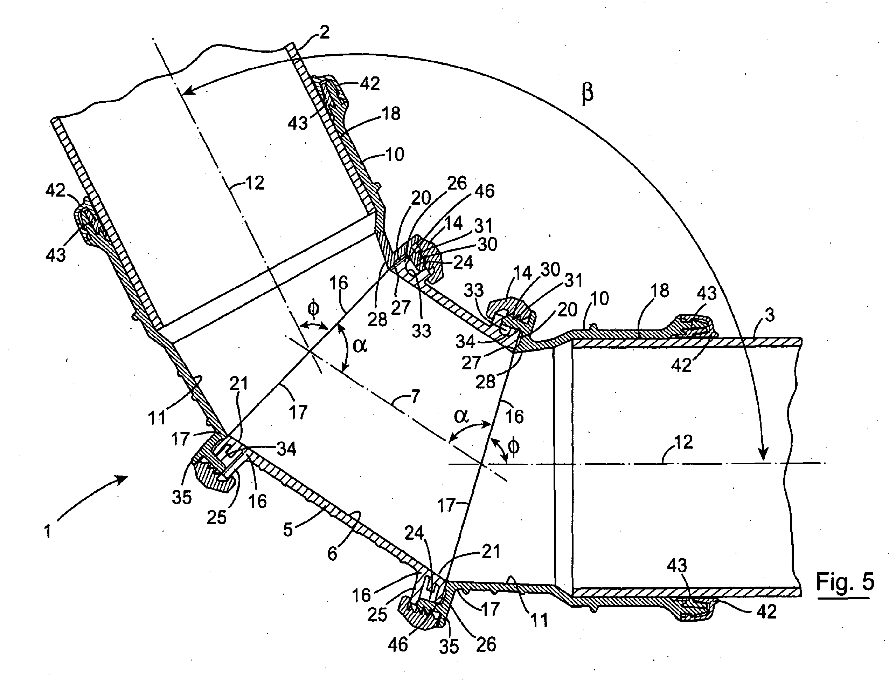

Referring to the drawings, there is illustrated a variable angle pipe connector according to the invention, indicated generally by the reference numeral 1, for joining two pipes, namely, pipes 2 and 3. The variable angle pipe connector 1 comprises a first pipe part 5 having a first bore 6 extending therethrough defining a first main central axis 7, and a pair of second pipe parts 10 each having a second bore 11 extending therethrough defining respective second main central axes 12. A pair of coupling means, namely, a pair of gland nuts 14 located on the first pipe part 5 couple the first pipe part 5 to the second pipe parts 10, so that the second pipe parts 10 are rotatable relative to the first pipe part 5 for altering the angles which the respective second main central axes 12 define with the first main central axis 7. Thus, the variable angle pipe connector 1 is suitable for joining pipes 2 and 3 which extend at a range of different angles to each other. In this embodiment of the invention by rotating the second pipe parts 10 through an angle of 180° relative to the first pipe part 5 from a first extreme configuration illustrated in Figs. 2 and 3 with the second main central axes 12 of the respective second pipe parts 10 aligned with each other and with the first main central axis 7, to a second extreme configuration illustrated in Fig. 4 with the respective second main central axes 12 defining an included angle β of 90° and each second main central axis 12 defining an included angle with the first main central axis 7 of 135°, the variable angle pipe connector 1 is adaptable for joining two pipes 2 and 3 extending at any angle relative to each other from 0° with the two pipes 2 and 3 aligned axially, up to 90° with the two pipes at 90° to each other. The variable angle pipe connector is illustrated in Fig. 5 in an intermediate configuration suitable for joining two pipes 2 and 3 with the angle between the two pipes 2 and 3 being greater than 0° and less than 90°.

The first pipe part 5 terminates in opposite first coupling ends 16. Each second pipe part 10 terminates at one end in a second coupling end 17 for rotatably engaging the corresponding first coupling end 16 of the first pipe part 5, and at the other end in a connecting means, in this embodiment of the invention a female connecting socket 18 of circular transverse cross-section for sealably engaging the corresponding one of the pipes 2 and 3, see in particular Fig. 5.

Each first coupling end 16 of the first pipe part 5 defines a first coupling face 20 which lies in a plane extending at a first angle α of 67.5° relative to the first main central axis 7. A first opening 21 of circular cross-section extends through each first coupling face 20 for communicating with the first bore 6 of the first pipe part 5. Each first opening 21 defines a first secondary central axis 22 which extends normal to the first coupling face 20 and extends relative to the first main central axis 7 at an angle θ, which is equal to 90° less the first angle α, namely, at an angle of 22.5°, see Fig. 2. A circular coupling flange 25 extends around the first pipe part 5 adjacent each first coupling end 16, and lies in a plane extending parallel to the plane in which the first coupling face 20 lies, and defines a central axis which coincides with the corresponding first secondary central axis 22. Each coupling flange 25, as will be described below, co-operates with the corresponding gland nut 14 for securing the corresponding second pipe part 10 to the first pipe part 5.

The planes in which the first coupling faces 20 lie, and in turn the planes in which the coupling flanges 25 lie define an angle δ with each other, which is equal to 180° less the two first angles α, and in this embodiment of the invention the angle δ is equal to 45°, see Fig. 4, so that when the second pipe parts 10 are in the first extreme configuration relative to the first pipe part 5, the first and second main central axes 7 and 12 coincide, and when the second pipe parts 10 are in the second extreme configuration relative to the first pipe part 5, the second main central axes 12 of the second pipe parts 10 extend at 90° to each other.

Each coupling flange 25 is spaced apart from the corresponding first coupling face 20, so that the first coupling faces 20 sit proud of the coupling flanges 25, and a portion of the first pipe part 5 between each coupling flange 25 and the adjacent first coupling face 20 forms a plug portion 26 of circular transverse cross-section. The plug portion 26 defines a central axis which coincides with the corresponding first secondary central axis 22.

The second coupling end 17 of each second pipe part 10 defines a second coupling face 27 for abutting the corresponding first coupling face 20 of the first pipe part 5. The second coupling face 27 lies in a plane extending relative to the second main central axis 12 of the second pipe part 10 at a second angle ϕ, which in this embodiment of the invention is similar to the first angle α of 67.5°, see Fig. 2. A second opening 28 extends through the second coupling face 27, and communicates with the second bore 11 extending through the second pipe part 10. The second opening 28 is circular and of diameter equal to that of the first opening 21, and defines a second secondary central axis 29 which extends normal to the second coupling face 27 and extends relative to the second main central axis 12 at an angle Y, which is equal to 90° less the second angle ϕ, namely, at an angle of 22.5°, see Fig. 2.

A hollow externally threaded spigot 30 with external threads 31 extends from the second coupling end 17 adjacent the second coupling face 27 and spaced apart from the second opening 28. The spigot 30 is of circular transverse cross-section and defines a central axis which coincides with the second secondary central axis 29. A central socket bore 24 of circular transverse cross-section extends into the spigot 30 for rotatably engaging a corresponding one of the plug portions 26 of the first pipe part 5 for facilitating rotation of the second pipe part 10 relative to the first pipe part 5, for in turn varying the angular configuration of the second pipe part 10 to the first pipe part 5.

Each gland nut 14 engages the corresponding coupling flange 25, and is internally threaded with internal threads 36 for engaging the external threads 31 of the spigot 30 of the corresponding second pipe part 10 for securing the second pipe part 10 to the first pipe part 5 with the corresponding first and second coupling faces 20 and 27 abutting and the plug portion 26 of the first pipe part 5 rotatably engaged in the socket bore 24 of the corresponding second pipe part 10, so that the plug portion 26 is rotatable in the socket bore 24 about the first and second secondary central axes 22 and 29. The diameter of each plug portion 26 at 46 is just less than the diameter of the socket bore 24 of the corresponding second pipe part 10, for facilitating relative rotation between the first and second pipe parts 5 and 10.

A sealing means comprising an O-ring seal 32 is located in an annular groove 33 extending around each plug portion 26 adjacent the corresponding first coupling end 16 of the first pipe part 5 between the corresponding first coupling face 20 and the coupling flange 25, for co-operating with an inner circumferential surface 34 of the socket bore 24 of the corresponding second pipe part 10, for in turn, forming a leak-proof joint between the first pipe part 5 and the corresponding second pipe part 10, see Figs. 3 and 4.

A circular abutment flange 35 extends circumferentially around the spigot 30 of each second pipe part 10 adjacent the second coupling end 17, and lies in a plane parallel to the corresponding second coupling face 27. The abutment flange 35 of each second pipe part 10 defines a central axis which coincides with the corresponding second secondary central axis 29.

According to the invention as defined in claim 1, a securing means for securing the gland nuts 14 when tightly secured on the corresponding spigots 30 comprises pairs of inter-engageable complementary formations formed on the abutment flanges 35 of second pipe parts 10 and on gland nuts 14. In this embodiment of the invention one set of the complementary inter-engageable formations is provided by a plurality of angled lands 37 which are formed around each abutment flange 35, which in turn define steps 38 for engaging a corresponding set of the inter-engageable formations, namely, corresponding steps 39 of corresponding angled lands 40 on a radial surface 41 of the corresponding gland nut 14. The angling of the lands 37 and 40 is such that each gland nut 14 can be rotated relative to the corresponding spigot 30 for tightening the gland nut 14 onto the threads 31 of the spigot 30, and when each gland nut 14 is secured to the appropriate tightness on the spigot 30 of the corresponding second pipe part 10, the steps 38 and 39 inter-engage to secure and to prevent counter-rotation of the gland nuts 14, thereby avoiding any danger of loosening of the gland nuts 14, and in turn any loosening of the joint between the second pipe parts 10 and the first pipe part 5 once tightened to the appropriate degree of tightness to produce leak-proof joints. However, the threads 31 of the spigots 30 and the threads 36 of the gland nuts 14 are arranged so that when the steps 38 and 39 of the lands 37 and 40 inter-engage, the second coupling face 27 of the corresponding second pipe part 10 is in tight rotatable abutting engagement with the corresponding first coupling face 20 of the first pipe part 5. Additionally, the steps 38 and 39 of the lands 37 and 40 are of sufficient depth to accommodate reasonable manufacturing tolerances in the first and second pipe parts 5 and 10 and the gland nuts 14.

Annular seals 43 are located in the connecting sockets 18 of the second pipe part 10 for sealably engaging the corresponding pipes 2 and 3, and clamping rings 42 secure the annular seals 43 in the connecting sockets 18, see Fig. 5.

Longitudinally extending strengthening ribs 44 are provided on the first and second pipe parts 5 and 10, and partially circumferentially extending strengthening ribs 45 are also provided on the first and second pipe parts 5 and 10. The ribs 44 and 45 are illustrated in Fig. 5 on the first pipe part 5.

In this embodiment of the invention the first and second pipe parts 10 are of injection moulded plastics material, and the gland nuts 14 are also of injection moulded plastics material.

In use, with the O-ring seals 32 located in the grooves 33 in the plug portions 26 at the first coupling ends 16 of the first pipe part 5, and the gland nuts 14 located on the first pipe part 5 between the coupling flanges 25, the plug portions 26 are engaged in the socket bores 24 of the corresponding second pipe parts 10, and the gland nuts 14 are threaded onto the corresponding spigots 30 and tightened onto the spigots 30 until the first and second coupling faces 20 and 27 are in rotatable abutting engagement and the steps 38 and 39 of the angled lands 37 and 40 inter-engage for securing the first and second pipe parts 5 and 10 together.

When it is desired to join a pair of pipes 2 and 3 which are axially aligned with each other, the second pipe parts 10 are rotated relative to the first pipe part 5 about the respective pairs of coinciding first and second secondary central axes 22 and 29 into the first extreme configuration illustrated in Figs. 2 and 3, with the second main central axes 12 of the second pipe parts 10 aligned with each other and also aligned with the first main central axis 7 of the first pipe part 5. With the first and second main central axes 7 and 12 so aligned, the first and second pipe parts 5 and 10 are axially aligned, and the variable angle pipe connector 1 is suitable for coupling the aligned pipes 2 and 3. The pipes 2 and 3 are then engaged in the corresponding connecting sockets 18.

Where it is desired to couple a pair of pipes 2 and 3 which extend at an angle to each other greater than 0° and up to 90°, the second pipe parts 10 are rotated relative to the first pipe part 5 about the respective pairs of coinciding first and second secondary central axes 22 and 29 from the first extreme configuration until the second main central axes 12 of the second pipe parts 10 define an included angle β, which corresponds to the angle at which the pipes 2 and 3 extend relative to each other, see Figs. 4 and 5. When rotating the second pipe parts 10 relative to the first pipe part 5 in order that the second pipe parts 10 extend from the first pipe part 5 with their respective second main central axes 12 defining the desired included angle β, the angle through which the respective second pipe parts 10 are rotated relative to the first pipe part 5 from the first extreme configuration should be similar.

When the second pipe parts 10 have been rotated relative to the first pipe part 5 so that the second main central axes 12 of the second pipe parts 10 extend at the desired included angle β, the second pipe parts 10 are angled relative to each other for coupling the two pipes 2 and 3 at the desired angle, and the pipes 2 and 3 are then engaged in the connecting sockets 18 of the corresponding second pipe parts 10.

While the variable angle pipe connector has been described as comprising three parts, namely, one first pipe part and two second pipe parts, in certain cases, it is envisaged that the variable angle pipe connector may be provided with only two pipe parts, and would comprise one first pipe part and one second pipe part. In which case, one of the ends of the first pipe part would terminate in a connecting means for connecting the first pipe part to the corresponding one of the pipes.

While the variable angle pipe connector has been described with the first and second coupling faces lying in planes extending at angles to the corresponding first main central axis and the second main central axis at respective first and second angles α and ϕ, which in this embodiment of the invention are similar, in certain cases, it is envisaged that the second angle may be different to the first angle, and indeed, in certain cases, it is envisaged that one of the first and second coupling faces may lie in a plane extending relative to the corresponding first main central axis or second main central axis, as the case may be, at the corresponding one of the first and second angles α and ϕ which may be an angle of 90°, while the other of the first and second coupling faces may lie in a plane, which would extend at an angle less than 90° relative to the corresponding first or second main central axis.

It will be appreciated that while the spigots of the second pipe parts have been described as being externally threaded, in certain cases, the spigots may be internally threaded, and in which case, the gland nut would be externally threaded. It is also envisaged that while it is desirable that each coupling flange should extend completely around the first pipe part and should be circular, this is not essential. Indeed, each coupling flange may be provided by a plurality of radially extending spaced apart flanges extending from the first pipe part.

While the variable angle pipe connector has been described with the first and second pipe parts and the gland nuts being of injection moulded plastics material, it is envisaged that the first and second pipe parts and the gland nuts may be of any other suitable material.

While the variable angle pipe connector has been described as comprising the coupling flanges formed on the first pipe part and the threaded spigots being formed on the second pipe parts, it is envisaged that the variable angle pipe connector may be provided with the coupling flanges on the second pipe parts and the threaded spigots on the first pipe parts.

It will also be appreciated that while the connecting means for connecting the variable angle pipe connector to the respective pipes to be coupled have been described as being socket connectors, it will be appreciated that any suitable connecting means may be provided, and the connecting means may be male or female connecting means, and where female connecting means, may be provided by any other socket type or other such female connecting means.

It is also envisaged that other suitable securing means may be provided besides angled lands and steps for securing the gland nuts when tightened to the appropriate degree of tightness.

## Claims

1. A variable angle pipe connector for coupling two pipes (2,3), the variable angle pipe connector (1) comprising a first pipe part (5) and a second pipe part (10), the first pipe part (5) having a first bore (6) extending therethrough defining a longitudinally extending first main central axis (7), and terminating in a first coupling end (16) defining a first coupling face (20) extending at a first angle (α) to the first main central axis (7), a first opening (21) extending through the first coupling face (20) to the first bore (6) and defining a first secondary central axis (22) normal to the first coupling face (20) and extending relative to the first main central axis (7) at an angle equal to ninety degrees less the first angle (α), the second pipe part having a second bore (11) extending therethrough defining a longitudinally extending second main central axis (12), and terminating in a second coupling end (17) defining a second coupling face (27) extending at a second angle (ϕ) to the second main central axis (12), at least one of the first and second angles (α,ϕ) being less than 90°, a second opening (28) extending through the second coupling face (27) to the second bore (11) and defining a second secondary central axis (29) normal to the second coupling face (27) and extending relative to the second main central axis (12) at an angle equal to ninety degrees less the second angle (ϕ), a coupling means (14,25,30) for coupling the first and second pipe parts (5,10) together with the first and second secondary central axes (22,29) coinciding, the first and second openings (21,28) communicating the first and second bores (6,11) of the respective first and second pipe parts (5,10), and the first and second pipe parts (5,10) being rotatable relative to each other about the first and second secondary central axes (22,29) for varying an included angle (β) defined by the first and second main central axes (7,12), the coupling means (14;25,30) comprising a coupling flange (25) extending externally from one of the first and second pipe parts (5,10) adjacent the corresponding one of the first and second coupling ends (16,17) thereof, a hollow threaded spigot (30) extending from the corresponding one of the first and second coupling ends (16,17) of the other of the first and second pipe parts (5,10), and a gland nut (14) co-operable with the coupling flange (25) and the threaded spigot (30) for coupling the first and second pipe parts (5,10) together, **characterised in that** a securing means (35,37,38,39,40) is provided for securing the gland nut (14) with the threaded spigot (30), the securing means (37,38,39,40) comprising a pair of inter-engageable complementary formations (37,38,39,40), one of the said formations (37,38) being located adjacent the threaded spigot (30,35), and the other of the inter-engageable complementary formations (39,40) being located on the gland nut (14).

2. A variable angle pipe connector as claimed in Claim 1 **characterised in that** the threaded spigot (30) is externally threaded (31), and the gland nut (14) is internally threaded (36) for co-operating with the external threads (31) of the threaded spigot (30).

3. A variable angle pipe connector as claimed in Claim 1 or 2 **characterised in that** the coupling flange (25) defines a circular outer periphery defining a central axis coinciding with the corresponding one of the first and second secondary central axes (22,29) of the first and second pipe parts (5,10) from which the coupling flange (25) extends.

4. A variable angle pipe connector as claimed in any preceding claim **characterised in that** the threaded spigot (30) defines a central socket bore (24) and a central spigot axis which coincides with the corresponding one of the first and second secondary central axes (22,29) of the one of the first and second pipe parts (5,10) from which the threaded spigot (30) extends.

5. A variable angle pipe connector as claimed in Claim 4 **characterised in that** the coupling flange (25) is spaced apart from the corresponding one of the first and second coupling faces (20,27) of the one of the first and second pipe parts (5,10) from which the coupling flange (25) extends so that the corresponding one of the first and second coupling faces (20,27) sits proud of the coupling flange (25), and a portion (26) of the one of the first and second pipe parts (5,10) from which the coupling flange (25) extends between the coupling flange (25) and the corresponding one of the first and second coupling faces (20,27) forms a plug portion (26) for engaging the socket bore (24) of the threaded spigot (30), and a sealing means (32) is located between the plug portion (26) and the threaded spigot (30) in the socket bore (24) thereof for sealing the first and second pipe parts (5,10) adjacent the coupling means (14,25,30).

6. A variable angle pipe connector as claimed in Claim 5 **characterised in that** the sealing means (32) comprises an annular sealing member (32) located in an annular groove (33) extending around one of the plug portion (26) and the threaded spigot in the socket bore (24) thereof.

7. A variable angle pipe connector as claimed in Claim 5 or 6 **characterised in that** the plug portion (26) is rotatably engageable in the socket bore (24).

8. A variable angle pipe connector as claimed in any preceding claim **characterised in that** the first angle (α) and the second angle (ϕ) is not less than 45°, and preferably, the first angle (α) and the second angle (ϕ) is not less than 55°, and advantageously, the first angle (α) and the second angle (ϕ) is not less than 67.5°, and ideally, the second angle (ϕ) is equal to the first angle (α).

9. A variable angle pipe connector as claimed in any preceding claim **characterised in that** the first and second openings (21,28) are of circular cross-sectional area.

10. A variable angle pipe connector as claimed in any preceding claim **characterised in that** the first and second openings (21,28) are of similar diameter.

11. A variable angle pipe connector as claimed in any preceding claim **characterised in that** the second pipe part (10) terminates in a connecting means (18) at an end thereof opposite the second coupling end (17) for coupling the second pipe part (10) to one of a pair of pipes (2,3) to be coupled by the variable angle pipe connector (1).

12. A variable angle pipe connector as claimed in any preceding claim **characterised in that** the first pipe part (5) terminates at its opposite ends in respective first coupling ends (16), each first coupling end (16) being adapted for coupling to a second coupling end (17) of a corresponding second pipe part (10). and a pair of coupling means (14,25,30) being provided for coupling the first pipe part (5) to the respective second pipe parts (10).

13. A variable angle pipe connector as claimed in Claim 12 **characterised in that** the first coupling faces (20) defined by the respective first coupling ends (16) of the first pipe part (5) define respective first planes, and the first planes define an included angle (δ) equal to 180° less the sum of the two first angles (α).

14. A variable angle pipe connector as claimed in any of Claims 1 to 11 **characterised in that** the first pipe part terminates in a connecting means at an end thereof opposite the first coupling end for coupling the first pipe part (5) to one of a pair of pipes (2,3) to be coupled by the variable angle pipe connector (1).

## Patentansprüche

1. Rohrverbindungsvorrichtung für variable Winkel zum Koppeln zweier Rohre (2, 3), wobei die Rohrverbindungsvorrichtung (1) für variable Winkel ein erstes Rohrteil (5) und ein zweites Rohrteil (10) umfasst, wobei das erste Rohrteil (5) eine erste Bohrung (6) aufweist, die sich durch dieses erstreckt, wobei diese eine in Längsrichtung verlaufende erste Hauptmittelachse (7) definiert, und in einem ersten Kopplungsende (16) endet, das eine erste Kopplungsfläche (20) ausbildet, die sich in einem ersten Winkel (α) zur ersten Hauptmittelachse (7) erstreckt, eine erste Öffnung (21), die sich durch die erste Kopplungsfläche (20) zur ersten Bohrung (6) hin erstreckt und eine erste Sekundärmittelachse (22) definiert, die normal zur ersten Kopplungsfläche (20) steht und sich relativ zur ersten Hauptmittelachse (7) in einem Winkel gleich 90° minus dem ersten Winkel (α) erstreckt, wobei das zweite Rohrteil eine zweite Bohrung (11) aufweist, die sich durch dieses erstreckt, wobei diese eine in Längsrichtung verlaufende zweite Hauptmittelachse (12) ausbildet, und in einem zweiten Kopplungsende (17) endet, das eine zweite Kopplungsfläche (27) definiert, die sich in einem zweiten Winkel (ϕ) zur zweiten Hauptmittelachse (12) erstreckt, wobei wenigstens einer von erstem und zweitem Winkel (α,ϕ) kleiner als 90° ist, eine zweite Öffnung (28), die sich durch die zweite Kopplungsfläche (27) zur zweiten Bohrung (11) hin erstreckt und eine zweite Sekundärmittelachse (29) definiert, die normal zur zweiten Kopplungsfläche (27) verläuft und sich relativ zur zweiten Hauptmittelachse (12) in einem Winkel gleich 90° minus dem zweiten Winkel (ϕ) erstreckt, ein Kopplungsmittel (14, 25, 30) zum Koppeln der ersten und zweiten Rohrteile (5, 10) miteinander, wobei die ersten und zweiten Sekundärmittelachsen (22, 29) zusammenfallen, wobei die erste und zweite Öffnung (21, 28) mit der ersten und zweiten Bohrung (6, 11) des jeweils ersten und zweiten Rohrteils (5, 10) kommuniziert, und wobei das erste und zweite Rohrteil (5, 10) relativ zueinander um die erste und zweite Sekundärmittelachse (22, 29) drehbar sind, um einen eingeschlossenen Winkel (β), der zwischen den ersten und zweiten Hauptmittelachsen (7, 12) ausgebildet ist, zu verändern, wobei die Kopplungsmittel (14, 25, 30) einen Koppelflansch (28) umfassen, der sich außerhalb von einem der ersten und zweiten Rohrteile (5, 10) benachbart dem korrespondierenden der ersten und zweiten Kopplungsenden (16, 17) von diesen erstreckt, wobei ein Gewindeansatz (30) sich vom korrespondierenden von erstem und zweitem Kopplungsende (16, 17) des anderen von erstem und zweitem Rohrteil (5, 10) aus erstreckt, und eine Überwurfmutter (14), die mit dem Koppelflansch (25) und dem Gewindeansatz (30) zum Koppeln von erstem und zweitem Rohrteil (5, 10) miteinander In Wechselwirkung bringbar ist, **dadurch gekennzeichnet, dass** ein Sicherungsmittel (35, 37, 38, 39, 40) vorgesehen ist, um die Überwurfmutter (14) an dem Gewindeansatz (30) zu sichern, wobei das Sicherungsmittel (37, 38, 39, 40) ein Paar miteinander in Eingriff bringbarer Komplementärformationen (37, 38, 39, 40) umfasst, wobei eine der Formationen (37, 38) benachbart dem Gewindeansatz (30, 35) angeordnet ist, und wobei die andere der miteinander in Eingriff bringbaren Komplementärformationen (39, 40) an der Überwurfmutter (14) angeordnet ist.

2. Rohrverbindungsvorrichtung für variable Winkel nach Anspruch 1,
**dadurch gekennzeichnet, dass** der Gewindeansatz (30) mit einem Außengewinde (31) versehen ist, und dass die Überwurfmutter (14) mit einem Innengewinde (36) zum Zusammenwirken mit dem Außengewinde (31) des Gewindeansatzes (30) ausgebildet ist.

3. Rohrverbindungsvorrichtung für variable Winkel nach Anspruch 1 oder 2,
**dadurch gekennzeichnet, dass** der Kopplungsflansch (25) eine ringförmige Außenperipherie ausbildet, die eine zentrale Achse definiert, die mit der korrespondierenden von erster und zweiter zentraler Achse (22, 29) des ersten und zweiten Rohrteils (5, 10) zusammenfällt, von der aus sich der Kopplungsflansch (25) erstreckt.

4. Rohrverbindungsvorrichtung für variable Winkel nach einem der vorangehenden Ansprüche,
**dadurch gekennzeichnet, dass** der Gewindeansatz (30) eine zentrale Ansatzbohrung (24) und eine zentrale Ansatzachse aufweist, die mit der korrespondierenden von erster und zweiter Sekundärmittelachse (22, 29) von einem von ersten und zweiten Rohrteilen (5, 10) zusammenfällt, von denen ausgehend sich der Gewindeansatz (30) erstreckt.

5. Rohrverbindungsvorrichtung für variable Winkel nach Anspruch 4,
**dadurch gekennzeichnet, dass** der Kopplungsflansch (25) von der korrespondierenden von erster und zweiter Kopplungsfläche (20, 27) von einem des ersten und zweiten Rohrteils (5, 10), von dem sich aus der Kopplungsflansch (25) erstreckt, beabstandet ist, so dass die korrespondierende von erster und zweiter Kopplungsfläche (20, 27) hervorstehend von dem Kopplungsflansch (25) angeordnet ist, und wobei ein Abschnitt (26) des einen von erstem und zweitem Rohrteil (5, 10), von dem aus sich der Kopplungsflansch (25) erstreckt, zwischen dem Kopplungsflansch (25) und der korrespondierenden von erster und zweiter Kopplungsfläche (20, 27) einen Steckerabschnitt (26) zum Angreifen an der Ansatzbohrung (24) des Gewindeansatzes (30) ausbildet, und wobei ein Dichtmittel (32) zwischen dem Steckerabschnitt (26) und dem Gewindeansatz (30) in der Ansatzbohrung (24) von diesem zum Abdichten von erstem und zweitem Rohrteil (5, 10) benachbart zu den Kopplungsmitteln (14, 25, 30) angeordnet ist.

6. Rohrverbindungsvorrichtung für variable Winkel nach Anspruch 5,
**dadurch gekennzeichnet, dass** das Dichtmittel (32) ein ringförmiges Dichtelement (32) umfasst, das in einer ringförmigen Vertiefung (33) angeordnet ist, die sich um den Steckerabschnitt (26) und den Gewindeansatz in der Ansatzbohrung (24) davon herum erstreckt.

7. Rohrverbindungsvorrichtung für variable Winkel nach Anspruch 5 oder 6,
**dadurch gekennzeichnet, dass** der Steckerabschnitt (26) drehbar in der Ansatzbohrung (24) in Eingriff bringbar ist.

8. Rohrverbindungsvorrichtung für variable Winkel nach einem der vorangehenden Ansprüche,
**dadurch gekennzeichnet, dass** der erste Winkel (α) und der zweite Winkel (ϕ) nicht kleiner als 45° sind, und bevorzugt der erste Winkel (α) und der zweite Winkel (ϕ) nicht kleiner als 55° sind, und vorteilhafterweise der erste Winkel (α) und der zweite Winkel (ϕ) nicht kleiner als 67,5° sind, und idealerweise der zweite Winkel (ϕ) gleich dem ersten Winkel (α) ist.

9. Rohrverbindungsvorrichtung für variable Winkel nach einem der vorangehenden Ansprüche,
**dadurch gekennzeichnet, dass** die erste und zweite Öffnung (21, 28) kreisförmige Querschnittsfläche haben.

10. Rohrverbindungsvorrichtung für variable Winkel nach einem der vorangehenden Ansprüche,
**dadurch gekennzeichnet, dass** die erste und zweite Öffnung (21, 28) denselben Durchmesser aufweisen.

11. Rohrverbindungsvorrichtung für variable Winkel nach einem der vorangehenden Ansprüche,
**dadurch gekennzeichnet, dass** das zweite Rohrteil (10) In einem Verbindungswirikel (18) an einem Ende von diesem endet, das entgegengesetzt zum zweiten Kopplungsende (17) zum Koppeln des zweiten Rohrteils (10) mit einem des Paares der Rohre (2, 3) angeordnet ist, das mit der Rohrverbindungsvorrichtung (1) für variable Winkel zu koppeln ist.

12. Rohrverbindungsvorrichtung für variable Winkel nach einem der vorangehenden Ansprüche,
**dadurch gekennzeichnet, dass** das erste Rohrteil (5) an seinen entgegengesetzten Enden In jeweiligen ersten Kopplungsenden (16) endet, wobei das erste Kopplungsende (16) dazu ausgelegt ist, um mit dem zweiten Kopplungsende (17) eines korrespondierenden zweiten Rohrteils (10) gekoppelt zu werden, und wobei ein Paar von Kopplungsmitteln (14, 25, 30) vorgesehen ist, um mit dem ersten Rohrteil (5) an den jeweiligen zweiten Rohrteilen (10) gekoppelt zu werden.

13. Rohrverbindungsvorrichtung für variable Winkel nach Anspruch 12,
**dadurch gekennzeichnet, dass** die ersten Kopplungsflächen (20), die von den jeweiligen ersten Kopplungsenden (16) des ersten Rohrteils (5) gebildet werden, jeweilige erste Flächen definieren und dass die ersten Flächen einen eingeschlossenen Winkel (δ) gleich 180° definieren, der kleiner als die Summe der ersten Winkel (α) ist.

14. Rohrverbindungsvorrichtung für variable Winkel nach einem der Ansprüche 1 bis 11,
**dadurch gekennzeichnet, dass** das erste Rohrteil in einem Verbindungsmittel an einem Ende von diesem endet, das entgegengesetzt zu dem ersten Kopplungsende zum Koppeln des ersten Rohrteils (5) mit einem aus einem Paar von Rohren (2, 3) ausgebildet ist, die mit der Rohrverbindungsvorrichtung (1) für variable Winkel zu koppeln ist.

## Revendications

1. Raccord de tuyau à angle variable pour accoupler deux tuyaux (2, 3), le raccord de tuyau à angle variable (1) comprenant une première partie de tuyau (5) et une seconde partie de tuyau (10), la première partie de tuyau (5) comportant un premier alésage (6) s'étendant à travers celle-ci définissant un premier axe central principal s'étendant longitudinalement (7), et se terminant dans une première extrémité d'accouplement (16) définissant une première face d'accouplement (20) s'étendant à un premier angle (α) par rapport au premier axe central principal (7), une première ouverture (21) s'étendant à travers la première face d'accouplement (20) jusqu'au premier alésage (6) et définissant un premier axe central secondaire (22) normal à la première face d'accouplement (20) et s'étendant par rapport au premier axe central principal (7) à un angle égal à quatre-vingt-dix degrés moins le premier angle (α), la seconde partie de tuyau comportant un second alésage (11) s'étendant à travers celle-ci définissant un second axe central principal s'étendant longitudinalement (12), et se terminant dans une seconde extrémité d'accouplement (17) définissant une seconde face d'accouplement (27) s'étendant à un second angle (ϕ) par rapport au second axe central principal (12), au moins un des premier et second angles (α, ϕ) étant inférieur à 90°, une seconde ouverture (28) s'étendant à travers la seconde face d'accouplement (27) jusqu'au second alésage (11) et définissant un second axe central secondaire (29) normal à la seconde face d'accouplement (27) et s'étendant par rapport au second axe central principal (12) à un angle égal à quatre-vingt-dix degrés moins le second angle (ϕ), un moyen d'accouplement (14, 25, 30) pour accoupler les première et seconde parties de tuyau (5, 10) conjointement avec les premier et seconde axes centraux secondaires (22, 29) coïncidant, les première et seconde ouvertures (21, 28) faisant communiquer les premier et second alésages (6, 11) des première et seconde parties de tuyau respectives (5, 10), et les première et seconde parties de tuyau (5, 10) étant rotatives l'une par rapport à l'autre autour des premier et seconde axes centraux secondaires (22, 29) pour varier un angle inclus (β) défini par les premier et second axes centraux principaux (7, 12), le moyen d'accouplement (14, 25, 30) comprenant une bride d'accouplement (25) s'étendant extérieurement à partir d'une des première et seconde parties de tuyau (5, 10) de façon adjacente à l'extrémité d'accouplement correspondante des première et seconde extrémités d'accouplement (16, 17) de celles-ci, un bout mâle fileté creux (30) s'étendant à partir de l'extrémité d'accouplement correspondante des première et seconde extrémités d'accouplement (16, 17) de l'autre des première et seconde parties de tuyau (5, 10), et un écrou de presse-garniture (14) pouvant coopérer avec la bride d'accouplement (25) et le bout mâle fileté (30) pour accoupler les première et seconde parties de tuyau (5, 10) ensemble, **caractérisé en ce qu'**un moyen de fixation (35, 37, 38, 39, 40) est prévu pour fixer l'écrou de presse-garniture (14) avec le bout mâle fileté (30), le moyen de fixation (37, 38, 39, 40) comprenant une paire de formations complémentaires pouvant entrer mutuellement en prise (37, 38, 39, 40), une desdites formations (37, 38) étant positionnée de façon adjacente au bout mâle fileté (30, 35), et l'autre des formations complémentaires pouvant entrer mutuellement en prise (39, 40) étant positionnée sur l'écrou de presse-garniture (14).

2. Raccord de tuyau à angle variable selon la revendication 1, **caractérisé en ce que** le bout mâle fileté (30) est fileté extérieurement (31), et l'écrou de presse-garniture (14) est fileté intérieurement (36) pour coopérer avec les filets extérieurs (31) du bout mâle fileté (30) .

3. Raccord de tuyau à angle variable selon la revendication 1 ou 2, **caractérisé en ce que** la bride d'accouplement (25) définit une périphérie extérieure circulaire définissant un axe central coïncidant avec l'axe central secondaire correspondant des premier et seconde axes centraux secondaires (22, 29) des première et seconde parties de tuyau (5, 10) à partir desquelles la bride d'accouplement (25) s'étend.

4. Raccord de tuyau à angle variable selon une quelconque revendication précédente, **caractérisé en ce que** le bout mâle fileté (30) définit un alésage d'emboîture central (24) et un axe de bout mâle central qui coïncide avec l'axe central secondaire correspondant des premier et seconde axes centraux secondaires (22, 29) de l'une des première et seconde parties de tuyau (5, 10) à partir de laquelle le bout mâle fileté (30) s'étend.

5. Raccord de tuyau à angle variable selon la revendication 4, **caractérisé en ce que** la bride d'accouplement (25) est espacée de la face d'accouplement correspondante des première et seconde faces d'accouplement (20, 27) de l'une des première et seconde parties de tuyau (5, 10) à partir de laquelle la bride d'accouplement (25) s'étend de sorte que la face d'accouplement correspondante des première et seconde faces d'accouplement (20, 27) se trouve au-dessus de la bride d'accouplement (25), et une partie (26) de l'une des première et seconde parties de tuyau (5, 10) à partir de laquelle la bride d'accouplement (25) s'étend entre la bride d'accouplement (25) et la face d'accouplement correspondante des première et seconde faces d'accouplement (20, 27) forme une partie de bouchon (26) pour entrer en prise avec l'alésage d'emboîture (24) du bout mâle fileté (30), et un moyen d'étanchéité (32) est situé entre la partie de bouchon (26) et le bout mâle fileté (30) dans l'alésage d'emboîture (24) de celui-ci pour rendre étanches les première et seconde parties de tuyau (5, 10) de façon adjacente au moyen d'accouplement (14, 25, 30).

6. Raccord de tuyau à angle variable selon la revendication 5, **caractérisé en ce que** le moyen d'étanchéité (32) comprend un élément d'étanchéité annulaire (32) situé dans une rainure annulaire (33) s'étendant autour d'un élément parmi la partie de bouchon (26) et le bout mâle fileté dans l'alésage d'emboîture (24) de celui-ci.

7. Raccord de tuyau à angle variable selon la revendication 5 ou 6, **caractérisé en ce que** la partie de bouchon (26) peut s'engager de façon rotative dans l'alésage d'emboîture (24).

8. Raccord de tuyau à angle variable selon une quelconque revendication précédente, **caractérisé en ce que** le premier angle (α) et le second angle (ϕ) ne sont pas inférieurs à 45°, et de préférence, le premier angle (α) et le second angle (ϕ) ne sont pas inférieurs à 55°, et avantageusement, le premier angle (α) et le second angle (ϕ) ne sont pas inférieurs à 67,5°, et idéalement, le second angle (9) est égal au premier angle (α).

9. Raccord de tuyau à angle variable selon une quelconque revendication précédente, **caractérisé en ce que** les première et seconde ouvertures (21, 28) sont de superficie de section transversale circulaire.

10. Raccord de tuyau à angle variable selon une quelconque revendication précédente, **caractérisé en ce que** les première et seconde ouvertures (21, 28) sont de diamètre similaire.

11. Raccord de tuyau à angle variable selon une quelconque revendication précédente, **caractérisé en ce que** la seconde partie de tuyau (10) se termine dans un moyen de liaison (18) à une extrémité de celle-ci en face de la seconde extrémité d'accouplement (17) pour accoupler la seconde partie de tuyau (10) à un d'une paire de tuyaux (2, 3) destinés à être accouplés par le raccord de tuyau à angle variable (1).

12. Raccord de tuyau à angle variable selon une quelconque revendication précédente, **caractérisé en ce que** la première partie de tuyau (5) se termine à ses extrémités opposées dans des premières extrémités d'accouplement respectives (16), chaque première extrémité d'accouplement (16) étant adaptée pour s'accoupler avec une seconde extrémité d'accouplement (17) d'une seconde partie de tuyau correspondante (10), une paire de moyens d'accouplement (14, 25, 30) étant prévue pour accoupler la première partie de tuyau (5) avec les secondes parties de tuyau respectives (10).

13. Raccord de tuyau à angle variable selon la revendication 12, **caractérisé en ce que** les premières faces d'accouplement (20) définies par les premières extrémités d'accouplement respectives (16) de la première partie de tuyau (5) définissent des premiers plans respectifs, et les premiers plans définissent un angle inclus (δ) égal à 180° moins la somme des deux premiers angles (α).

14. Raccord de tuyau à angle variable selon l'une quelconque des revendications 1 à 11, **caractérisé en ce que** la première partie de tuyau se termine dans un moyen de liaison à une extrémité de celle-ci en face de la première extrémité d'accouplement pour accoupler la première partie de tuyau (5) à un d'une paire de tuyaux (2, 3) destinés à être accouplés par le raccord de tuyau à angle variable (1).
